# EUROPÄISCHE PATENTSCHRIFT

(11) **EP 3 129 184 B1**
(45) Veröffentlichungstag und Bekanntmachung des Hinweises auf die Patenterteilung: **21.08.2019**
(21) Anmeldenummer: 15725985.4
(22) Anmeldetag: 09.04.2015
(51) Int. Cl.: G01L 1/16, G01L 1/26, B23K 20/12

(54) **VERFAHREN UND VORRICHTUNG ZUR ERFASSUNG DER MECHANISCHEN KRÄFTE AN DER SCHWEISSPIN-SPITZE BEI DEM VORGANG DES RÜHRREIBSCHWEISSENS**
METHOD AND APPARATUS FOR DETECTION OF MECHANICAL FORCES AT THE TIP OF THE WELDING PIN IN THE PROCESS OF FRICTION STIR WELDING
PROCÉDÉ ET APPAREIL DE DÉTECTION DES FORCES MÉCANIQUES SUR LA POINTE DE TÊTE DE SOUDAGE DANS LE PROCÉDÉ DE SOUDAGE PAR FRICTION

(30) Priorität: 10.04.2014 DE 102014005315
(43) Veröffentlichungstag der Anmeldung: 15.02.2017
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Kindermann, Peter
(86) Internationale Anmeldenummer: PCT/DE2015/000177
(87) Internationale Veröffentlichungsnummer: WO 2015/154744

(56) Entgegenhaltungen:
- DE-B3-102012 010 836
- DE-U1-202012 103 219
- US-A1- 2009 294 511

## Beschreibung

Die Erfindung betrifft ein Verfahren und eine Vorrichtung zur Erfassung der mechanischen Kräfte an der Schweißpin-Spitze bei dem Vorgang des Rührreibschweißens.

Anfang der neunziger Jahre des vorigen Jahrhunderts wurde das Rührreibschweißen, oder auch Reibrührschweißen genannt, entwickelt. Das Rührreibschweißen wird unter anderem für das Schweißen von Aluminiumlegierungen mittlerweile in vielen relevanten Industriebereichen erfolgreich eingesetzt. Die Anwendungen reichen hierbei von Einzelstücken und Kleinserien bis hin zu größeren Serien.

Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei. Dieses Verfahren lässt sich sehr gut automatisieren und erlaubt eine Qualitätsüberwachung auf der Basis einer Maschinenüberwachung.

Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im Inneren der Naht der zu verbindenden aneinander stoßenden Materialien. Der aufgebrachte Druck presst das plastifizierte Material zusammen. Am Ende dieser Naht wird das Werkzeug aus dem Verbindungsbereich herausgezogen und die Schweißnaht ist unmittelbar belastbar.

Aus der DE 20 2012 103 219 U1 ist eine Pressschweißvorrichtung bekannt, der die Zielsetzung zugrunde liegt, eine verbesserte Prozessschweißtechnik, insbesondere Reibschweißtechnik, aufzuzeigen als beim bekannten Stand der Technik. Hierzu wird im Oberbegriff des Anspruchs 1 von einer Prozessschweißvorrichtung mit einer Plastifizierungseinrichtung und einer Staucheinrichtung zur Herstellung einer Schweißverbindung zwischen Werkstückteilen ausgegangen, wobei die Prozessschweißvorrichtung eine um eine Rotationsachse rotierbare Spannvorrichtung mit einem Drehantrieb für ein erstes Werkstückteil und eine weitere Spannvorrichtung für ein weiteres, insbesondere zweites Werkstückteil, sowie eine Vorschubeinrichtung zur gegenseitigen Annäherung der Spannvorrichtungen aufweist.

Zum Erreichen der genannten Zielsetzung soll nach den Merkmalen im Kennzeichen des Anspruchs 1 unter Schutz gestellt werden, dass die Pressschweißvorrichtung ein berührungslos messendes Messmittel zur Erfassung der Oberflächenbeschaffenheit und/oder des Rundlaufs und/oder des Planlaufs an einem stirnseitigen Schweißbereich eines Werkstückteils aufweist.

Aus der, auf die Anmelderin zurückgehenden, DE 10 2012 010 836 B3 sind ein Verfahren und eine Vorrichtung zur Verbesserung der Qualität der Schweißnaht beim Rührreibschweißen bekannt, der die Zielsetzung zugrunde liegen, die Standzeit des Rührreibwerkzeugs von ca. 2 Stunden auf 15 Stunden zu erhöhen und die Qualität der Fügenaht so zu erhöhen, dass keinerlei Nachbearbeitung erforderlich ist. Dies wird erreicht mit einer Vorrichtung mit den folgenden Merkmalen:
a) einer Aufnahmeplatte (1) mit einem Antriebskopf (2) und einem Spindellager (4) zur Aufnahme einer Reibschweißspitze (9), wobei im Spindellager (4) eine spiralförmig ausgearbeitete Transportschnecke (6) die zum Abtransport von nicht benötigtem Material - Auftrag dient, in schräg nach außen führende Öffnungen (8) mündet,
b) die Längssachse des Spindellagers (4) ist gegen die Vertikale in einem Winkel von 2,8 bis 3,2 Grad geneigt,
c) die Gleitfläche der Drehspindel besteht aus einer ebenen Gleitfläche (10) und besonders zur Verschweißung von kurvenförmigen Nähten aus jeweils einer, auf zwei gegenüber liegenden Seiten anschließenden, zur Gleitfläche (11) in einem spitzen Winkel geneigten, in sich gewölbten Gleitfläche (11),
d) die Reibschweißspitze (9) weist die Form eines Kegelstumpfes auf, bei dem die Deckfläche in der Mitte erhöht ist, und wobei die Mantelfläche des Kegelstumpfes durch sechs trapezförmige Flächenstücke gebildet wird, von denen drei Flächenstücke jeweils am Umfang gleichmäßig verteilt sich in einem Winkel von 120 Grad gegenüber liegen und einen größeren Anteil als 1/6 am Kreisumfang beanspruchen.

Zur exakten Steuerung des axialen Anpressdrucks und des auftretenden Drehmoments beim Rührreibschweißen ist es wichtig, die genannten Prozessparameter an der Stelle des Schweißprozesses zu kennen. Dies ist vor allem dann schwierig, wenn bei den zu fügenden Bauteilen die Messung von Kraft, Drehmoment oder dergleichen nah am Schweißgeschehen erfolgen muss, wie zum Beispiel bei 3D-Anwendungen, bei denen ansonsten eine aufwendige Kompensation der Gewichtskräfte der Spindel und des Werkzeugs erfolgen muss. Des Weiteren erfolgt die bisherige Messung über Schwerkraftsensoren die weit entfernt vom Wirkort sind und damit auf Grund von Fehlhebeln und großen Wirkabständen fehlerbehaftet sind.

Dokument US-A-2009 294511, das als nächstliegender Stand der Technik gilt, offenbart eine Vorrichtung zur Erfassung der mechanischen Kräfte. Die Messwerte können mit einer Antenne weitergeleitet werden.

Der vorliegenden Erfindung liegt deshalb die Aufgabe zugrunde, eine Vorrichtung und ein Verfahren zu schaffen, bei dem der Schweißvorgang beim Rührreibschweißen derart optimiert ist, dass die maßgebenden Prozessparameter, wie die auftretende Axialkraft des Werkzeugs, das auftretende Drehmoment und die Temperatur der Schweißpin-Spitze, auch in 3D-Anwendungen exakt erfasst werden können.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 4 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig.1: eine Seitenansicht einer Anordnung zum Rührreibschweißen,
Fig.2: eine Darstellung der Messwert-Erfassung, und
Fig.3: Einzelheiten der Messwert-Erfassung.

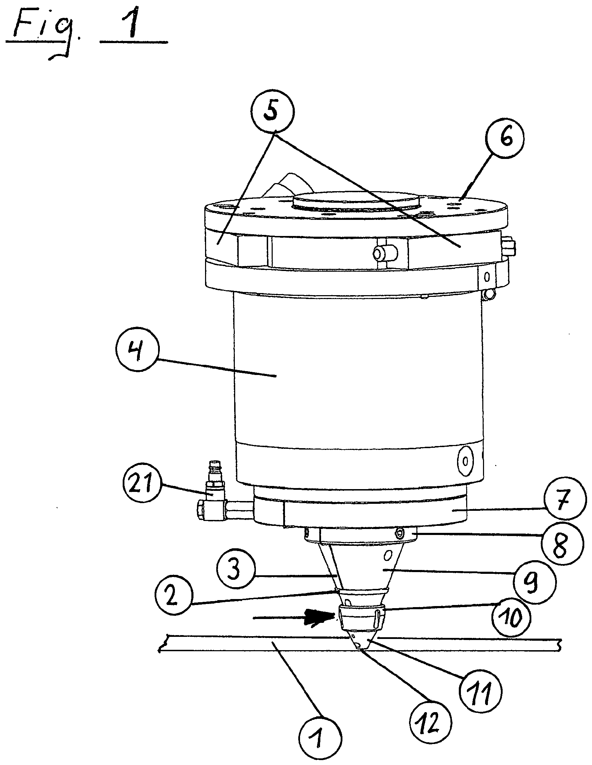

Die Fig.1 zeigt eine Seitenansicht einer Anordnung zum Rührreibschweißen.

Mit 1 ist hierbei ein zu fügendes Bauteil in der Art zweier zu verschweißender Metallflächen bezeichnet. Diesem Zweck dient ein Reibschweißkopf der ein Getriebe 4 aufweist, das mittels eines Flansches 6 an einem, den Vorgang des Rührreibschweißens steuernden, Roboterarm befestigt sein kann. Anstelle eines Getriebes kann auch ein Direkt-Motor verwendet werden. Ein solcher Roboterarm ist hier nicht dargestellt. Zur Messung des Drucks mit dem der Roboterarm auf den Reibschweißkopf drückt, dienen Wegaufnehmer 5, von denen hier zwei dargestellt sind. Hierbei kann es sich auch um Sensoren zur Messung von Kraft, Druck oder Weg handeln. Im unteren Bereich des Getriebes, bzw. Direktmotors, 4 ist eine Befestigungsplatte 7 zur Befestigung eines Werkzeugglocken-Flanschs 8 am Getriebe, bzw. Direktmotor, 4 zu erkennen. Mittels des Flanschs 8 wird wiederum eine Werkzeugglocke 9 gehaltert, die ihrerseits über eine Überwurfmutter 10 einen Schweißschuh 11 fixiert. Durch den Schweißschuh 11 wird sodann eine Schweißpin-Spitze 12 mit dem zu fügenden Bauteil 1 in Verbindung gebracht.

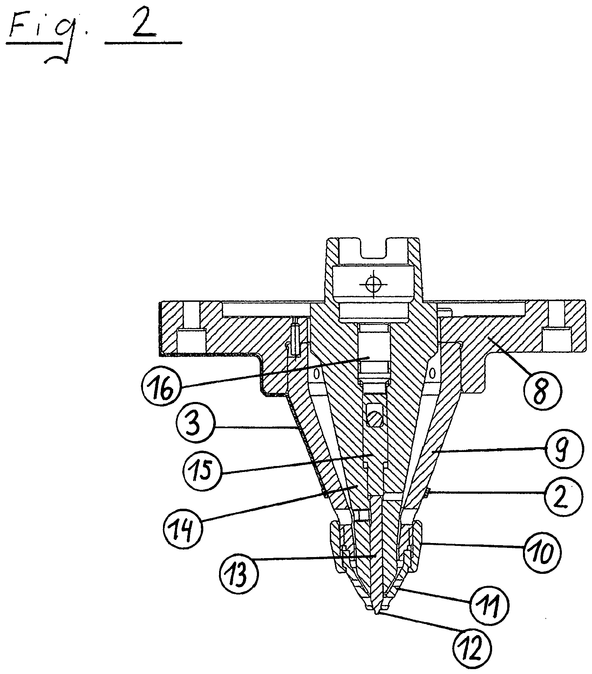

Mittels eines Anschlusses 21 kann in den Bereich der Werkzeugglocke 9 Zuluft und/oder Reinigungsflüssigkeit transportiert werden. Näheres wird hierzu bei der Beschreibung der Fig.2 erwähnt.

Zur Erfassung der auf die Werkzeugglocke 9 beim Betrieb des Rührreibschweißens wirkenden Kräfte dient ein Sensor 3 in der Form eines Dehnungs - Meßstreifen (DMS) an der Außenseite der Werkzeugglocke 9. Der DMS ist hier beispielhaft, es kann sich auch um einen Sensor 3 zur Bestimmung von Kraft, Druck oder Weg handeln. Dieser an der Außenseite der Werkzeugglocke 9 in Längsrichtung angebrachte Dehnungs - Meßstreifen ist deshalb an derjenigen Seite der Werkzeugglocke 9 angebracht, die der Bearbeitungsrichtung entgegengesetzt ist, weil hier die stärkste Verformung der Werkzeugglocke 9 zu erwarten ist. Zur Verstärkung des vom Sensor 3 ermittelten Mess - Signals dient ein Verstärker 2 der gleichzeitig mit seiner Antenne bezeichnet ist.

Die Fig.2 zeigt eine Darstellung der Messwert - Erfassung.

Hier ist der aus der Fig.1 bekannte Werkzeugglocken - Flansch 8 im Schnitt zu sehen, der mit der Werkzeugglocke 9 verbunden ist. Am linken Rand der Verbindung des Werkzeugglocken - Flanschs 8 mit der Werkzeugglocke 9 ist als stark herausgezogene Linie der Sensor 3 an der Werkzeugglocke 9 zu erkennen. Im unteren Bereich des Sensors 3 ist der Verstärker 2 des Mess - Signals des Sensors 3 in Verbindung mit seiner Antenne dargestellt. Die Stromversorgung dieses Systems erfolgt auf induktivem Weg mittels entsprechender, im Inneren der Werkzeugglocke 9 verlaufender und später beschriebenen, Vorrichtungen.

Im Inneren der Werkzeugglocke 9 ist zentral ein Werkzeug - Aufnahmekegel 14 gelagert der in seiner Längsachse einen Pin - Schaft 13 mit einer vorgelagerten Schweißpin - Spitze 12 führt, wobei die Schweißpin - Spitze 12 über den Schweißschuh 11 mit der Werkzeugglocke 9 mittels der Überwurfmutter 10 verbunden ist. Der Pin - Schaft 13 ist über ein Pin - Einstellelement 15 mit einem Gegenlager 16 verbunden. Als Pin - Einstellelement 15 kann hier ein, nicht näher dargestelltes, elektronisch betätigbares, Piezo - Einstellelement dienen.

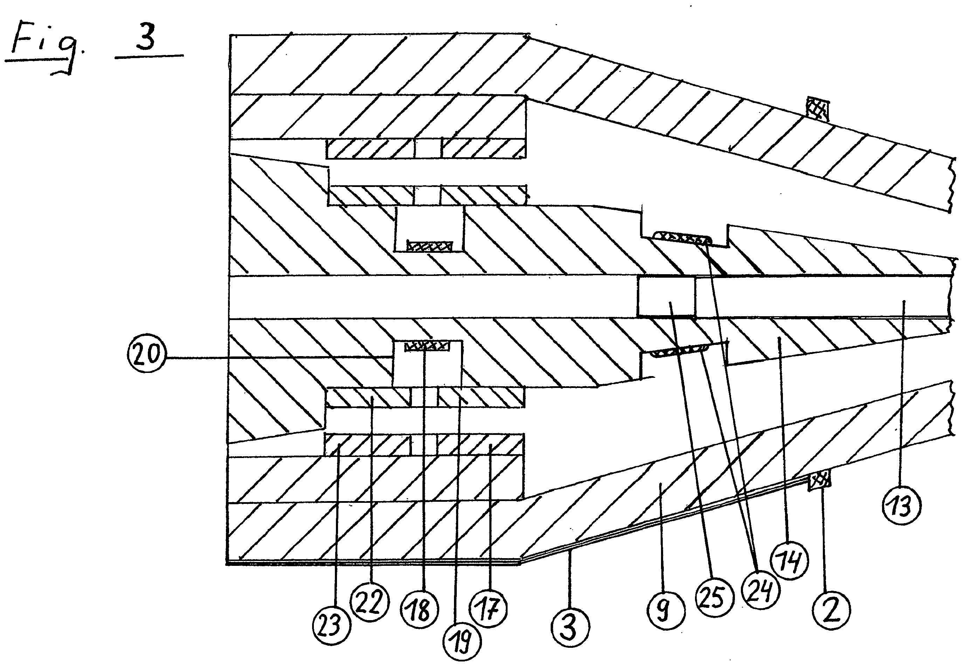

Die Fig.3 zeigt Einzelheiten der Messwert - Erfassung. In dieser Darstellung ist die Werkzeugglocke 9 stilisiert im Schnitt mit dem Werkzeug - Aufnahmekegel 14 dargestellt. Auf der, im Schnitt gezeigten, unteren Seite der Werkzeugglocke 9 sind hier wieder der, schon früher beschriebene, Sensor 3 und der zugehörige Verstärker 2 mit seiner Antenne zu sehen.

Der gezeigte Werkzeug - Aufnahmekegel 14 mit dem Pin -Schaft 13 lässt hierbei in seinem breiteren Bereich eine Kegel - Taillierung 20 erkennen die zur Aufnahme eines Sensors 18 dient. Diese Taillierung ist hierbei zur Verdeutlichung betont herausgestellt, sie kann jedoch auch entfallen. Die mechanische Querschnitts - Verengung durch die Kegel - Taillierung 20 und die an dieser Stelle erfolgte Platzierung des Sensors 18 ermöglichen die Messung des am Werkzeug - Aufnahmekegel 14 angreifenden Axialkraft, des Drehmoments und die Messung eines hier auftretenden Biegemoments. Die Signalübertragung der von dem Sensor 18 ermittelten Messwerte erfolgt über einen, mit dem Werkzeug - Aufnahmekegel 14, drehbaren Signalverstärker 19 und einer Rotorantenne. Der Empfang und die Weiterleitung der von dem Sensor 18 ermittelten Messwerte erfolgt über eine statisch fest stehende Antenne 17.

Im vorderen Bereich des Werkzeug - Aufnahmekegels 14 befindet sich eine weitere, nicht näher bezeichnete, Taillierung die Dehnungs - Meßstreifen 24 Raum gibt, und die die Messung der auf den Pin - Schaft 13, und damit die Schweißpin - Spitze 5 direkt, wirkende Axialkraft ermöglicht. Die Dehnungs - Meßstreifen 24 bestehen aus beispielsweise drei Streifen die, im Abstand von 120 Grad am Umfang des Werkzeug - Aufnahmekegels 14 verteilt, in der dargestellten Taillierung angebracht sind. Es können hier auch mehr als drei Streifen am Umfang verteilt angebracht sein. Optional kann sich hier zusätzlich in der Längsachse des Pin - Schafts 13 ein piezoelektrischer Kraft - Mess - Sensor 25 der ebenfalls zur Messung der Axialkraft dient, befinden. Im Betrieb können für besonders empfindliche Prozesse die Messwerte der Sensoren 24 und 25 gleichzeitig erfasst und zueinander in Bezug gesetzt werden, um Messfehler auszuschließen. Der Empfang und die Weiterleitung der von den Sensoren 24 und 25 ermittelten Messwerte erfolgt ebenfalls über die statisch fest stehende Antenne 17.

Zur Stromversorgung der beschriebenen Mess - Systeme dient eine induktive Stromversorgung, deren statische, primäre, Wicklung mit 23 und deren bewegliche, sekundäre, Wicklung mit 22 bezeichnet ist.

Die komplexe Steuerung der beschriebenen Bewegungsabläufe erfordert ein spezielles Steuerungsprogramm.

### Bezugszeichenliste

- 1: zu fügendes Bauteil
- 2: Verstärker des Mess - Signals einer Werkzeugglocke und Antenne
- 3: Sensor an der Werkzeugglocke 9 (Dehnungs - Meßstreifen)
- 4: Getriebe oder Direkt - Motor für einen Reibschweißkopf
- 5: Wegaufnehmer für einen Flansch eines Reibschweißkops
- 6: Flansch zum Anschluss an einem Roboterarm
- 7: Befestigungsplatte für einen Werkzeugglocken - Flansch
- 8: Werkzeugglocken - Flansch
- 9: Werkzeugglocke
- 10: Überwurfmutter
- 11: Schweißschuh
- 12: Schweißpin - Spitze
- 13: Pin - Schaft
- 14: Werkzeug - Aufnahmekegel
- 15: Pin - Einstellelement
- 16: Gegenlager für den Pin
- 17: statische Antenne
- 18: Sensor(beispielsweise DMS) für den Werkzeug - Aufnahmekegel 14
- 19: Sensor - Signalverstärker und Rotorantenne
- 20: Kegel - Taillierung zur Aufnahme eines Sensors (elastischer Punkt)
- 21: Anschluss für Zuluft und/oder Reinigungsflüssigkeit
- 22: induktive Stromversorgung, sekundäre Wicklung
- 23: induktive Stromversorgung, primäre Wicklung
- 24: Sensor zur Messung einer Axialkraft
- 25: piezoelektrischer Kraft - Mess - Sensor

## Patentansprüche

1. Vorrichtung zur Erfassung der mechanischen Kräfte an der Schweißpin-Spitze bei dem Vorgang des Rührreibschweißens, mit den folgenden Merkmalen:
a) einem streifenförmigen Sensor (3) an einer Längsseite einer, einen Schweißpin-Stift (12) über einen Pin-Schaft (13) mittels eines Werkzeug-Aufnahmekegels (14) und einen Schweißschuh (11) haltenden, Werkzeugglocke (9), wobei der Sensor (3) zur Bestimmung von Kraft, Druck oder Weg ausgebildet ist und auf der Seite der Werkzeugglocke (9) angebracht ist, die der Flussrichtung des Schweißprozesses entgegengesetzt ist,
b) einer Kegel-Taillierung (20) im breiteren Bereich des Werkzeug-Aufnahmekegels (14) die der Aufnahme eines Sensors (18) zur Erfassung der Axialkraft, des Drehmoments und des Biegemoments an dem Schweißpin-Stift (12) dient,
c) einer weiteren Taillierung im vorderen Bereich des Werkzeug-Aufnahmekegels (14) mit mindestens drei, am Umfang im Abstand von 120 Grad verteilten, Sensoren (24) und einem piezoelektrischen Kraft-Mess-Sensor (25) in der Längsachse des Pin-Schafts (13),
d) einem Sensor-Signalverstärker mit einer Rotorantenne (19) zum Empfang, zur Verstärkung und zur Weiterleitung aller erfassten Messwerte, wobei diese Messwerte von einer statischen Antenne (17) an eine Maschinensteuerung weitergeleitet werden, und
e) einem induktiven Stromversorgungs-System zur Versorgung des Mess-Systems aus einer sich bewegenden, sekundären, Wicklung (22) und einer fest stehenden, primären, Wicklung (23).

2. Vorrichtung nach Anspruch 1, **dadurch gekennzeichnet, dass** die Auswertung der Messergebnisse auch zur Steuerung der Längenabmessung eines Pin-Einstellelements (15) benutzt wird.

3. Vorrichtung nach einem der vorhergehenden Ansprüche,
**dadurch gekennzeichnet,**
**dass** während oder nach dem Schweißprozess mittels eines Anschlusses (21) Zuluft und/oder Reinigungsflüssigkeit zugeführt werden kann.

4. Verfahren zur Erfassung der mechanischen Kräfte an der Schweißpin-Spitze bei dem Vorgang des Rührreibschweißens, mit den folgenden Merkmalen:
a) durch die Installation von Sensoren an bewegten und feststehenden Stellen des eine Rührreibschweißung tätigenden Werkzeugs werden die jeweils interessierenden, auf die Werkzeugteile einwirkenden mechanischen Kräfte erfasst,
b) die Weiterleitung der erfassten Messwerte erfolgt mittels eines Systems aus einer sich bewegenden (19) und aus einer feststehenden Antenne (17), wobei die Messwerte verstärkt und einer Auswertung zugeführt werden und die Stromversorgung auf induktivem Weg mittels einer feststehenden, primären, Wicklung (22) und einer bewegten, sekundären, Wicklung (23) erfolgt, und
c) die erfassten Messwerte werden ausgewertet und zur grundlegenden Regelung des jeweiligen Schweißprozesses verwendet.

5. Verfahren nach Anspruch 4, **dadurch gekennzeichnet,**
**dass** die Auswertung der Messergebnisse auch zur Steuerung der Längenabmessung eines Pin-Einstellelements (15) für die Einstellung der Schweißpin-Spitze (12) benutzt wird.

6. Verfahren nach einem der Ansprüche 4 oder 5,
**dadurch gekennzeichnet,**
**dass** während oder nach dem Schweißprozess mittels eines Anschlusses (21) Zuluft und/oder Reinigungsflüssigkeit zugeführt wird.

## Claims

1. Device for detecting the mechanical forces at the welding pin tip in the procedure of friction stir welding, the device having the following features:
a) a strip-shaped sensor (3) on a longitudinal side of a tool bell (9) which by way of a pin shaft (13) by means of a tool receptacle conus (14) and a welding shoe (11) holds a welding pin (12), wherein the sensor (3) is configured for determining force, pressure, or path, and is attached to that side of the tool bell (9) that is counter to the flow direction of the welding process;
b) a tailored conus feature (20) in the comparatively wide region of the tool receptacle conus (14), which serves for receiving a sensor (18) for determining the axial force, the torque, and the bending moment at the welding pin (12);
c) a further tailored conus feature in the forward region of the tool receptacle conus (14), having at least three sensors (24), which are distributed on the circumference so as to be spaced apart by 120 degrees, and a piezoelectric force-measuring sensor (25) in the longitudinal axis of the pin shaft (13);
d) a sensor signal amplifier having a rotary antenna (19) for receiving, for amplifying, and for transmitting all detected measured values, wherein these measured values are transmitted by a static antenna (17) to a machine controller; and
e) an inductive power supply system for supplying the measuring system from a moving secondary coil (22) and from a stationary primary coil (23).

2. Device according to Claim 1, **characterized in that** the evaluation of the measured results is also utilized for controlling the longitudinal dimension of a pin adjustment element (15).

3. Device according to one of the preceding claims, **characterized in that** during or after the welding process, fresh air and/or cleaning fluid may be infed by means of a connector (21).

4. Method for detecting the mechanical forces at the welding pin tip in the procedure of friction stir welding, the method having the following features:
a) the mechanical forces of interest, which act on the tool parts, are detected by the installation of sensors on moving and stationary points of the tool performing a friction stir weld;
b) transmission of the detected measured values is performed by means of a system of a moving antenna (19) and a stationary antenna (17), wherein the measured values are amplified and infed to an evaluation unit, and the power supply is performed by way of induction by means of a stationary primary coil (22) and a moving secondary coil (23); and
c) the detected measured values are evaluated and used for fundamentally regulating the respective welding process.

5. Method according to Claim 4, **characterized in that** the evaluation of the measured values is also utilized for controlling the longitudinal dimension of a pin adjustment element (15) for adjusting the welding pin tip (12).

6. Method according to one of Claims 4 or 5, **characterized in that** during or after the welding process, fresh air and/or cleaning liquid is infed by means of a connector (21).

## Revendications

1. Appareil de détection des forces mécaniques sur la pointe de broche de soudage dans le procédé de soudage par friction, présentant les caractéristiques suivantes:
a) un capteur en forme de bande (3) sur un côté longitudinal d'une cloche d'outil (9) maintenant une tige de broche de soudage (12) par l'intermédiaire d'un corps de broche (13) au moyen d'un cône de réception d'outil (14) et un soulier de soudage (11), dans lequel le capteur (3) est conçu pour la détermination d'une force, d'une pression ou d'une course et est appliqué sur le côté de la cloche d'outil (9) qui est opposé à la direction de flux du processus de soudage,
b) une entaille de cône (20) dans la région plus large du cône de réception d'outil (14) qui sert pour le logement d'un capteur (18) pour la détection de la force axiale, du couple et du moment de flexion sur la tige de broche de soudage (12),
c) une autre entaille dans la région antérieure du cône de réception d'outil (14) avec au moins trois capteurs (24) répartis en périphérie à une distance de 120° et un capteur de mesure d'effort piézoélectrique (25) dans l'axe longitudinal du corps de broche (13),
d) un amplificateur de signal de capteur avec une antenne rotor (19) pour la réception, l'amplification et la retransmission de toutes les valeurs de mesure détectées, dans lequel ces valeurs de mesure sont retransmises d'une antenne statique (17) à une commande de machine, et
e) un système d'alimentation électrique par induction pour l'alimentation du système de mesure à partir d'un enroulement secondaire en mouvement (22) et d'un enroulement primaire immobile (23).

2. Dispositif selon la revendication 1, **caractérisé en ce que** l'on utilise l'évaluation des résultats de mesure également pour la commande de la dimension longitudinale d'un élément de réglage de broche (15).

3. Dispositif selon l'une quelconque des revendications précédentes, **caractérisé en ce que** de l'air d'appoint et/ou du liquide de nettoyage peut être fourni au moyen d'un raccord (21) pendant ou après le processus de soudage.

4. Procédé de détection des forces mécaniques sur la pointe de broche de soudage dans le procédé de soudage par friction, présentant les caractéristiques suivantes:
a) on détermine les forces mécaniques respectivement intéressantes agissant sur les parties d'outil par l'installation de capteurs en des endroits mobiles et fixes de l'outil opérant le soudage par friction,
b) on effectue la retransmission des valeurs de mesure détectées au moyen d'un système composé d'une antenne mobile (19) et d'une antenne fixe (17), dans lequel on amplifie les valeurs de mesure et on les envoie à une évaluation, et on effectue l'alimentation électrique de façon inductive au moyen d'un enroulement primaire immobile (22) et d'un enroulement secondaire en mouvement (23), et
c) on évalue les valeurs de mesure détectées et on les utilise pour la régulation de base du processus de soudage respectif.

5. Procédé selon la revendication 4, **caractérisé en ce que** l'on utilise l'évaluation des résultats de mesure également pour la commande de la dimension longitudinale d'un élément de réglage de broche (15) pour le réglage de la pointe de broche de soudage (12).

6. Procédé selon une des revendications 4 ou 5, **caractérisé en ce que** l'on fournit de l'air d'appoint et/ou du liquide de nettoyage au moyen d'un raccord (21) pendant ou après le processus de soudage.
